# FASCICULE DE BREVET EUROPEEN

(11) **EP 1 616 735 B1**
(45) Date de publication et mention de la délivrance du brevet: **14.11.2007**
(21) Numéro de dépôt: 05300516.1
(22) Date de dépôt: 27.06.2005
(51) Int. Cl.: B60H 1/28, B62D 25/08

(54) **Dispositif de protection d'un passage d'air d'une boîte à eau de véhicule automobile, et boîte à eau correspondante**
Vorrichtung zur Verhinderung des Wassereintritts in einem Luftkanal eines Wasserkastens eines Kraftfahrzeuges, und ein selbiger Wasserkasten
Device for preventing water to enter an air passage in a cowl of a motor vehicle, and corresponding cowl.

(30) Priorité: 13.07.2004 FR 0407817
(43) Date de publication de la demande: 18.01.2006
(73) Titulaire: RENAULT S.A.S., 92100 Boulogne Billancourt (FR)
(72) Inventeur: Grisot, Stéphane, 78150 Le Chesnay (FR)

(56) Documents cités:
- DE-C- 19 628 111
- FR-A- 2 740 401
- US-A- 3 747 500

## Description

L'invention concerne un dispositif de protection d'un passage d'air d'une boîte à eau de véhicule automobile, ainsi qu'une boîte à eau pourvue d'un tel dispositif.

Certaines boîtes à eau présentent des entrées d'air communiquant avec l'habitacle du véhicule automobile. Ces entrées d'air sont le plus souvent destinées à l'alimentation en air d'un bloc de climatisation du véhicule. La boîte à eau doit alors être conçue pour empêcher le passage vers le bloc de climatisation de l'eau qu'elle récupère.

Le document US-5 679 074 décrit une entrée d'air pourvue d'un séparateur d'air. Ce séparateur est formé d'une plaque disposée en regard du passage d'air, et traversée par une pluralité de sections de tubes par lesquels seul l'air passe. Le montage d'un tel séparateur peut toutefois s'avérer difficile lorsque l'espace situé en regard de l'entrée d'air est réduit.

On connaît également des boîtes à eau dans lesquelles le passage de l'eau au travers d'une entrée d'air est empêché au moyen d'une pièce en tôle en forme d'écope, soudée sur le bord inférieur du passage d'air, à l'intérieur de la boîte à eau. Le soudage d'une telle pièce est toutefois difficile, voire impossible, lorsque la boîte à eau présente des dimensions réduites.

Le document DE 19628111 décrit un passage d'air d'une boîte à eau comprenant une écope et une sortie d'air. L'écope est fixé d'une manière amovible sur un paroi de la boîte à eau.

L'invention vise à pallier ces inconvénients en proposant un dispositif de protection d'un passage d'air d'une boîte à eau pouvant être facilement monté sur une boîte à eau, en particulier lorsque l'espace disponible à l'intérieur de la boîte à eau est restreint.

A cet effet, l'objet de l'invention concerne un dispositif de protection destiné à empêcher l'eau contenue dans une boîte à eau de véhicule automobile de s'écouler par un passage d'air ménagé dans une paroi de cette boîte à eau, caractérisé en ce qu'il comprend :
- une écope dont un bord d'appui, destiné à être placé contre la paroi de la boîte à eau, supporte un joint d'étanchéité, l'écope étant conçue pour être placée à l'intérieur de la boîte à eau,
- une plaque de fixation pourvue d'une ouverture, destinée à être placée à l'extérieur de la boîte à eau de sorte que son ouverture coïncide au moins partiellement avec le passage d'air de la boîte à eau,
et en ce que le bord d'appui de l'écope et la plaque de fixation sont pourvus, sur au moins deux de leurs côtés opposés, de moyens de fixation complémentaires aptes à coopérer au travers du passage d'air de la boîte à eau de manière à maintenir ensemble l'écope et la plaque de fixation, en appui contre la paroi de la boîte à eau, de part et d'autre de celle-ci, dans une position dans laquelle le joint de l'écope est plaqué de manière étanche à l'eau contre la paroi de boîte à eau le long, ou à proximité, d'au moins une partie du bord inférieur du passage d'air.

L'écope n'est ainsi pas fixée directement sur la boîte à eau, généralement en tôle, et il n'est plus nécessaire de souder l'écope dans la boîte à eau. La position des moyens de fixation sur au moins deux côtés opposés permet d'obtenir une bonne adhérence du joint du bord d'appui contre la boîte à eau.

Ce dispositif présente en outre l'avantage de ne pas nécessiter la réalisation de moyens de fixation directement sur la boîte à eau, de sorte qu'il n'est pas nécessaire de prévoir de faibles tolérances de fabrication pour cette dernière. Le dispositif selon l'invention peut ainsi être disposé sur différentes sortes de boîtes à eau, notamment sur des boîtes à eau destinées à être placées d'un côté ou de l'autre du véhicule.

Avantageusement, le bord d'appui de l'écope est un bord fermé. Les moyens de fixation peuvent alors être disposés sur le côté supérieur du bord d'appui, améliorant le maintien de l'écope contre la boîte à eau.

De préférence, l'ouverture de la plaque de fixation et l'ouverture définie par le bord d'appui de l'écope sont sensiblement identiques au passage d'air, les moyens de fixation étant situés sur les bords de ces ouvertures. Ainsi, la réalisation de ces pièces peut être simplifiée. De plus, la mise en place du dispositif selon l'invention ne réduit pas ou peu la section du passage d'air. Plus avantageusement, le bord d'appui de l'écope et le bord de l'ouverture de la plaque de fixation sont alors pourvus de moyens d'indexage afin de faciliter le montage.

Avantageusement, les moyens de fixation situés d'un même côté permettent une rotation de l'écope par rapport à la plaque de fixation autour d'un axe sensiblement parallèle au bord d'appui de l'écope. Un montage aisé de l'écope sur la boîte à eau peut alors être réalisé.

Avantageusement, les moyens de fixation permettent une fixation amovible de l'écope et de la plaque de fixation. L'écope et la plaque de fixation peuvent ainsi être facilement montées et démontées lors des opérations de maintenance du véhicule. Il s'agit par exemple de moyens d'encliquetage réversible, pouvant, de préférence, être manipulés sans outils.

Avantageusement, la plaque de fixation est pourvue de moyens de fixation sur la face externe de la paroi de la boîte à eau. Cette fixation peut ainsi être réalisée avant le montage de la boîte à eau dans le véhicule, et permet de simplifier l'assemblage de l'écope et de plaque, celle-ci n'ayant alors plus besoin d'être maintenue. Une telle fixation permet également un positionnement correct de la plaque.

Avantageusement, l'écope et la plaque de fixation sont réalisées en matière plastique moulée. Elles peuvent ainsi être facilement formées d'une pièce avec leurs moyens de fixation.

L'invention concerne également une boîte à eau pour véhicule automobile comportant un passage d'air vers l'habitacle du véhicule, caractérisée en ce que sa paroi interne présente une surface plane sur le pourtour du passage d'air et en ce qu'un dispositif de protection selon l'invention est placé au niveau de son passage d'air de manière à ce que le joint de l'écope vienne en appui contre la surface plane.

L'invention est maintenant décrite en référence aux dessins annexés, non limitatifs, dans lesquels :
- la figure 1 est une représentation en perspective d'un dispositif selon l'invention monté sur la paroi d'une boîte à eau partiellement représentée ;
- la figure 2 est une représentation en perspective de l'écope de la figure 1 ;
- la figure 3 est une représentation en perspective de la plaque de fixation associée à l'écope de la figure 2 ;
- la figure 4 est une vue en perspective d'un moyen de fixation de l'écope ;
- la figure 5 est une vue en coupe de moyens de fixation de l'écope et de la plaque de fixation mis en prise.

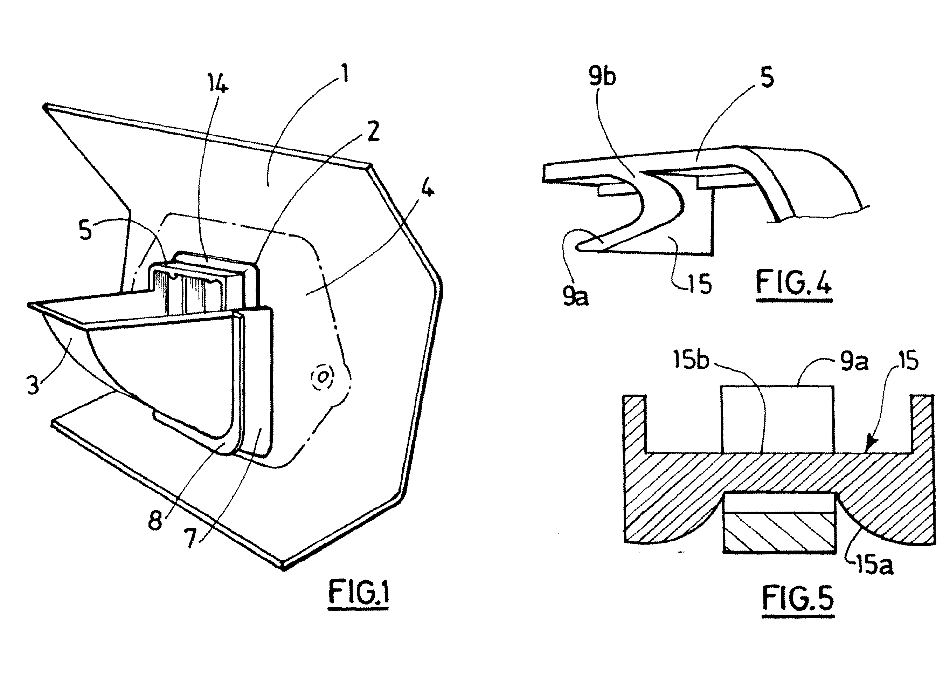

La figure 1 représente partiellement une paroi 1 d'une boîte à eau de véhicule automobile pourvue d'un passage d'air 2, destiné à être raccordé à un bloc de climatisation non représenté. Seule la face interne de la paroi de la boîte à eau est visible sur cette figure.

Afin d'éviter l'écoulement d'eau à travers ce passage d'air 2 depuis l'intérieur de la boîte à eau, une écope 3 est placée à l'intérieur de la boîte à eau, autour du passage d'air 2. L'écope est maintenue en place au moyen d'une plaque de fixation 4, représentée par un trait discontinu sur la figure 1. L'ensemble comportant l'écope 3 et la plaque de fixation 4 forme un dispositif de protection du passage d'air selon l'invention.

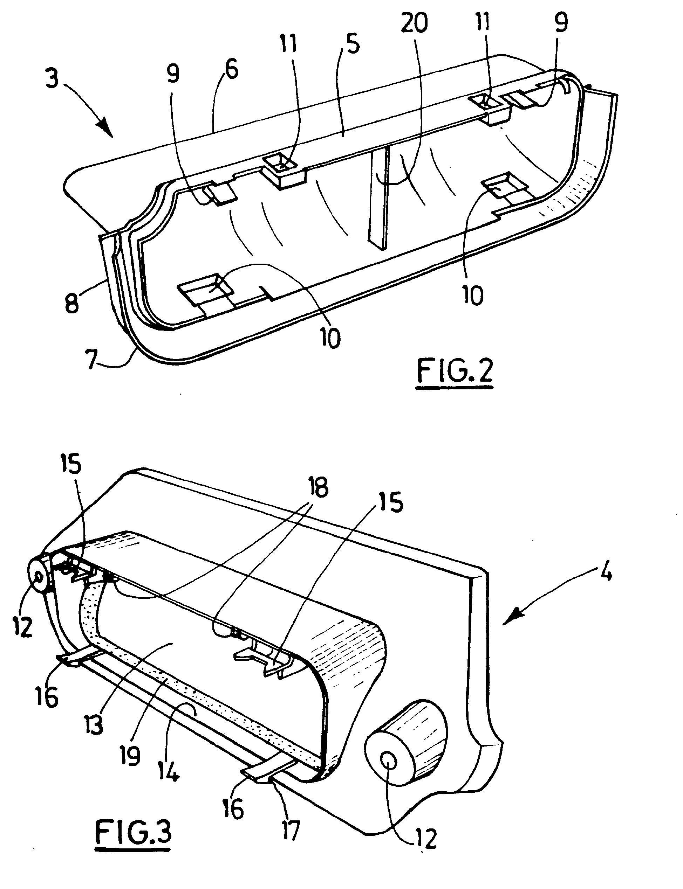

La structure de l'écope est maintenant décrite en référence à la figure 2.

L'écope 3 présente un bord d'appui fermé 5 sur une partie de la périphérie duquel est montée une partie 6 en forme de pelle. Ce bord d'appui 5 supporte, sensiblement le long de la partie en forme de pelle, un joint d'étanchéité à l'eau 7. A cet effet, le bord d'appui présente un rebord 8 saillant sensiblement perpendiculairement des parois adjacentes de la partie formant pelle 6. De préférence, ce joint 7 est un joint plat qui s'étend sensiblement parallèlement aux parois de la partie en forme de pelle 6, du côté du bord d'appui opposé à cette partie 6.

Le bord d'appui 5 délimite une ouverture correspondant sensiblement à la forme et aux dimensions du passage d'air 2 de la boîte à eau. Dans l'exemple, il présente une forme sensiblement rectangulaire.

Sur son côté supérieur, le bord d'appui 5 supporte des moyens de fixation 9. Ces moyens sont constitués de deux pinces d'encliquetage 9 ouvertes du côté opposé à la partie formant pelle 6. Chaque pince est formée de deux branches 9a, 9b assemblées en "V" tel que visible sur la figure 4. Les branches présentent des surfaces planes en regard servant de plans de guidage jusqu'au fond du "V" qu'elles forment. Ces branches sont sensiblement symétriques par rapport à un plan sensiblement horizontal.

Du côté opposé aux moyens de fixation 9, la partie formant pelle 6 supporte d'autres moyens de fixation formés de creux 10 dont la concavité est dirigée vers les moyens de fixation 9.

Le côté supérieur du bord d'appui 5 présente également des moyens d'indexage 11, formés de deux cavités dont la concavité est dirigée du côté opposé aux creux 10.

En référence à la figure 3, la plaque de fixation 4 présente deux orifices 12 situés sur des côtés opposés pour sa fixation par vissage, rivetage ou analogue sur la face externe de la paroi 1 de la boîte à eau.

Dans cette plaque de fixation 4, est ménagée une ouverture 13 dont les dimensions sont sensiblement identiques aux dimensions du bord d'appui 5 de l'écope, et, dans l'exemple, aux dimensions du passage d'air 2 de la boîte à eau.

Sur les côtés opposés du bord 14 de cette ouverture 13 sont situés des moyens de fixation supérieurs 15 et inférieurs 16.

Les moyens de fixation supérieurs sont formés de deux pattes 15 supportées sensiblement horizontalement et destinées à être encliquetées chacune au fond de chaque pince 9 de l'écope. La figure 5 représente une vue en coupe suivant un plan médian horizontal d'une pince, une patte 15 étant encliquetée dans la pince 9. Le bord de la patte dirigé vers la pince présente une échancrure 15a dont le fond est sensiblement de la même largeur que les branches 9a, 9b des pinces, tel que visible sur la figure 5. De préférence, les bords de cette échancrure sont arrondis, ou inclinés, pour guider et positionner les pattes 15 lors de leur mise en prise avec la pince. La présence de l'échancrure 15a amincit la partie centrale 15b de la patte (figure 5).

Les moyens de fixation inférieurs sont formés de deux pattes 16 saillant sensiblement horizontalement et perpendiculairement à la plaque 4. Ces pattes 16 présentent une saillie 17 dirigée vers le bas et destinée à venir s'encliqueter dans une creux 10 de l'écope. Les pattes 15 et 16 s'étendent de préférence dans des plans parallèles.

Le côté supérieur du bord 14 est également pourvu de moyens d'indexage qui sont formés par des pions d'indexage 18 saillant du bord 14 en direction des pattes 16 Ces pions 18 sont en forme de disques dont l'axe s'étend parallèlement au bord 14. Ces pions 18 sont dimensionnés et positionnés de manière à pouvoir être placés dans les cavités 11 de l'écope lors du montage.

Dans l'exemple, le bord 14 de l'ouverture est formé comme un rebord saillant de la surface de la plaque 4, tel que représenté sur la figure 3. Un tel rebord peut être avantageux lorsque la paroi 1 de la boîte à eau est galbée afin d'assurer une fixation correcte de l'écope et de la plaque de fixation. Il peut alors être emmanché dans le passage d'air 2, tel que visible sur la figure 1.

Le montage du dispositif de fixation peut être réalisé de la manière suivante. La plaque de fixation 4 est d'abord fixée sur la face externe de la paroi 1 de la boîte à eau. L'écope 3 est alors approchée de la face interne de la paroi, son bord d'appui étant dirigé vers la paroi 1. Les pions d'indexage 18 sont alors placés dans les cavités 11 de la plaque. Cette opération peut être effectuée en maintenant l'écope inclinée, le côté supérieur de son bord d'appui étant placé contre, ou proche, de la paroi 1. Dans cette position, les pattes d'encliquetage 15 de l'écope sont situées entre les branches 9a, 9b des pinces de la plaque. La forme arrondie des pions ainsi que l'inclinaison des branches 9a, 9b des pinces, permettent de pivoter l'écope vers le bas de manière à rapprocher l'ensemble du bord d'appui vers la paroi, jusqu'à ce que les parties amincies 15b des pattes 15 soient encliquetées dans les pinces 9 et que les pattes 16 soient encliquetées dans les creux 10. L'écope peut être facilement démontée en sortant les pattes 16 des creux 10 et en pivotant l'écope en sens inverse autour d'un axe sensiblement parallèle à son bord d'appui 5.

Les encliquetages supérieurs et inférieurs assurent un bon appui du joint 7 contre la paroi 1 de la boîte à eau. Afin d'améliorer l'étanchéité, la face interne de la paroi 1 présente une surface plane sensiblement sur toute le pourtour du passage d'air destiné à recevoir le joint.

On peut par ailleurs prévoir un joint d'étanchéité à l'air 19 (par exemple en mousse) disposé sur la plaque de fixation sur son côté opposé à la boîte à eau, autour de son ouverture 13, et destiné à assurer une étanchéité à l'air entre la plaque et une conduite d'arrivée d'air (non représentée) d'un bloc de climatisation.

La réalisation d'un bord d'appui fermé sur l'écope permet de renforcer la rigidité de celle-ci (notamment en rendant possible la réalisation d'une entretoise 20) et de faciliter sa fixation, les moyens de fixation étant alors placés sur les côtés supérieur et inférieur.

Le bord d'appui de l'écope pourrait toutefois être ouvert et être limité à la totalité ou à une partie du bord de la partie en forme de pelle. Les moyens de fixation peuvent alors être disposés sur les côtés latéraux opposés du bord d'appui, et de préférence également sur son côté inférieur. La plaque de fixation peut alors présenter une forme générale en U correspondante.

De préférence, l'écope et la plaque de fixation sont réalisées en matière plastique moulée. Les moyens de fixation sont alors formés d'une pièce avec l'écope et la plaque. Le joint d'étanchéité à l'eau est alors de préférence surmoulé sur le bord d'appui 5. On pourrait toutefois prévoir qu'il soit collé sur le bord, inséré dans une rainure, etc.

D'autres moyens de fixation supplémentaires pourraient bien sûr être prévus sur les côtés latéraux de l'écope et de la plaque, ou uniquement sur ces derniers.

Le dispositif selon l'invention, notamment lorsque les moyens de fixation sont des moyens d'encliquetage, permet de fixer l'écope à la main dans la boîte à eau, de sorte que l'écope peut être facilement montée, même lorsque l'espace intérieur de la boîte à eau est restreint.

## Revendications

1. Dispositif de protection destiné à empêcher l'eau contenue dans une boîte à eau de véhicule automobile de s'écouler par un passage d'air (2) ménagé dans une paroi (1) de cette boîte à eau, **caractérisé en ce qu**'il comprend :
- une écope (3) dont un bord d'appui (5), destiné à être placé contre la paroi (1) de la boite à eau, supporte un joint d'étanchéité (7), l'écope étant conçue pour être placée à l'intérieur de la boîte à eau,
- une plaque de fixation (4) pourvue d'une ouverture (13), destinée à être placée à l'extérieur de la boîte à eau de sorte que son ouverture coïncide au moins partiellement avec le passage d'air de la boîte à eau,
et en ce que le bord d'appui (5) de l'écope et la plaque de fixation (4) sont pourvus, sur au moins deux de leurs côtés opposés, de moyens de fixation complémentaires (9, 10, 15, 16) aptes à coopérer au travers du passage d'air (2) de la boîte à eau de manière à maintenir ensemble l'écope et la plaque de fixation, en appui contre la paroi de la boîte à eau, de part et d'autre de celle-ci, dans une position dans laquelle le joint de l'écope est plaqué de manière étanche à l'eau contre la paroi de boîte à eau le long, ou à proximité, d'au moins une partie du bord inférieur du passage d'air.

2. Dispositif de protection selon la revendication 1, **caractérisé en ce que** le bord d'appui (5) de l'écope est un bord fermé.

3. Dispositif de protection selon la revendication 1 ou 2, **caractérisé en ce que** l'ouverture (13) de la plaque de fixation et l'ouverture définie par le bord d'appui (5) de l'écope sont sensiblement identiques au passage d'air (2), les moyens de fixation (9, 10, 15, 16) étant situés sur les bords de ces ouvertures.

4. Dispositif selon la revendication 3, **caractérisé en ce que** le bord d'appui (5) de l'écope et le bord (14) de l'ouverture de la plaque de fixation sont pourvus de moyens d'indexage (11, 18).

5. Dispositif de protection selon l'une des revendications 1 à 4, **caractérisé en ce que** les moyens de fixation (9, 15) situés d'un même côté permettent une rotation de l'écope par rapport à la plaque de fixation autour d'un axe sensiblement parallèle au bord d'appui de l'écope.

6. Dispositif selon l'une des revendications 1 à 5, **caractérisé en ce que** les moyens de fixation (9, 10, 15, 16) permettent une fixation amovible de l'écope et de la plaque de fixation.

7. Dispositif selon l'une des revendications précédentes, **caractérisé en ce que** la plaque de fixation (4) est pourvue de moyens de fixation (12) sur la face externe de la paroi de la boîte à eau.

8. Dispositif selon l'une des revendications précédentes, **caractérisé en ce que** l'écope et la plaque de fixation sont réalisées en matière plastique moulée.

9. Boîte à eau pour véhicule automobile dont une paroi est pourvue d'un passage d'air vers l'habitacle du véhicule, **caractérisée en ce que** la face interne de cette paroi présente une surface plane sur le pourtour du passage d'air (2) et **en ce qu'**un dispositif de protection selon l'une des revendications 1 à 8 est placé au niveau du passage d'air de manière à ce que le joint de l'écope (7) vienne en appui contre la surface plane.

## Claims

1. Protective device intended to prevent the water contained in a motor vehicle water box from flowing through an air passage (2) formed in a wall (1) of this water box, **characterized in that** it comprises:
- a scoop (3) of which a bearing edge (5), intended to be positioned against the wall (1) of the water box, supports a seal (7), the scoop being designed to be positioned inside the water box,
- a fixing plate (4) provided with an opening (13) intended to be positioned outside the water box so that its opening at least partially coincides with the water box air passage,
and **in that** the bearing edge (5) of the scoop and the fixing plate (4) are provided, on at least two of their opposing sides, with complementary fixing means (9, 10, 15, 16) able to collaborate through the water box air passage (2) in order to hold the scoop and the fixing plate together, bearing against the wall of the water box, one on each side thereof, in a position in which the scoop seal is pressed in a watertight manner against the wall of the water box along, or near, at least part of the lower edge of the air passage.

2. Protective device according to Claim 1, **characterized in that** the bearing edge (5) of the scoop is a closed edge.

3. Protective device according to Claim 1 or 2, **characterized in that** the opening (13) in the fixing plate and the opening defined by the bearing edge (5) of the scoop are substantially identical to the air passage (2), the fixing means (9, 10, 15, 16) being positioned on the edges of these openings.

4. Device according to Claim 3, **characterized in that** the bearing edge (5) of the scoop and the edge (14) of the opening in the fixing plate are provided with indexing means (11, 18).

5. Protective device according to one of Claims 1 to 4, **characterized in that** the fixing means (9, 15) positioned on one and the same side allow the scoop to rotate with respect to the fixing plate about an axis substantially parallel to the bearing edge of the scoop.

6. Device according to one of Claims 1 to 5, **characterized in that** the fixing means (9, 10, 15, 16) allow the scoop and the fixing plate to be fixed removably.

7. Device according to one of the preceding claims, **characterized in that** the fixing plate (4) is provided with fixing means (12) for fixing it to the external face of the wall of the water box.

8. Device according to one of the preceding claims, **characterized in that** the scoop and the fixing plate are made of moulded plastic.

9. Water box for a motor vehicle, one wall of which is provided with an air passage leading to the cabin of the vehicle, **characterized in that** the internal face of this wall has a flat surface around the periphery of the air passage (2), and **in that** a protective device according to one of Claims 1 to 8 is positioned at the air passage so that the scoop seal (7) bears against the flat surface.

## Patentansprüche

1. Schutzvorrichtung, die dazu bestimmt ist, das in einem Wasserkasten eines Kraftfahrzeugs enthaltene Wasser daran zu hindern, durch einen in einer Wand (1) dieses Wasserkastens ausgebildeten Luftdurchlass (2) zu fließen, **dadurch gekennzeichnet, dass** sie aufweist:
- einen Wasserabweiser (3), von dem ein Auflagerand (5), der dazu bestimmt ist, gegen die Wand (1) des Wasserkastens angeordnet zu werden, eine Dichtung (7) trägt, wobei der Wasserabweiser konzipiert ist, um im Inneren des Wasserkastens angeordnet zu werden,
- eine mit einer Öffnung (13) versehene Befestigungsplatte (4), die dazu bestimmt ist, derart außerhalb des Wasserkastens angeordnet zu werden, dass ihre Öffnung zumindest zum Teil mit dem Luftdurchlass des Wasserkastens zusammenfällt,
und dass der Auflagerand (5) des Wasserabweisers und die Befestigungsplatte (4) auf mindestens zwei ihrer gegenüberliegenden Seiten mit komplementären Befestigungsmitteln (9, 10, 15, 16) versehen sind, die in der Lage sind, durch den Luftdurchlass (2) des Wasserkastens hindurch zusammenzuwirken, um den Wasserabweiser und die Befestigungsplatte zusammen in Auflage gegen die Wand des Wasserkastens zu deren beiden Seiten in einer Stellung zu halten, in der die Dichtung des Wasserabweisers entlang oder in der Nähe mindestens eines Bereichs des unteren Rands des Luftdurchlasses wasserdicht gegen die Wand des Wasserkastens gedrückt ist.

2. Schutzvorrichtung nach Anspruch 1, **dadurch gekennzeichnet, dass** der Auflagerand (5) des Wasserabweisers ein geschlossener Rand ist.

3. Schutzvorrichtung nach Anspruch 1 oder 2, **dadurch gekennzeichnet, dass** die Öffnung (13) der Befestigungsplatte und die vom Auflagerand (5) des Wasserabweisers definierte Öffnung im Wesentlichen gleich dem Luftdurchlass (2) sind, wobei die Befestigungsmittel (9, 10, 15, 16) sich auf den Rändern dieser Öffnungen befinden.

4. Schutzvorrichtung nach Anspruch 3, **dadurch gekennzeichnet, dass** der Auflagerand (5) des Wasserabweisers und der Rand (14) der Öffnung der Befestigungsplatte mit Indexierungsmitteln (11, 18) versehen sind.

5. Schutzvorrichtung nach einem der Ansprüche 1 bis 4, **dadurch gekennzeichnet, dass** die auf der gleichen Seite angeordneten Befestigungsmittel (9, 15) eine Drehung des Wasserabweisers bezüglich der Befestigungsplatte um eine Achse im Wesentlichen parallel zum Auflagerand des Wasserabweisers erlauben.

6. Schutzvorrichtung nach einem der Ansprüche 1 bis 5, **dadurch gekennzeichnet, dass** die Befestigungsmittel (9, 10, 15, 16) eine lösbare Befestigung des Wasserabweisers und der Befestigungsplatte erlauben.

7. Schutzvorrichtung nach einem der vorhergehenden Ansprüche, **dadurch gekennzeichnet, dass** die Befestigungsplatte (4) mit Befestigungsmitteln (12) auf der Außenseite der Wand des Wasserkastens versehen ist.

8. Schutzvorrichtung nach einem der vorhergehenden Ansprüche, **dadurch gekennzeichnet, dass** der Wasserabweiser und die Befestigungsplatte aus geformtem Plastikmaterial hergestellt werden.

9. Wasserkasten für ein Kraftfahrzeug, von dem eine Wand mit einem Luftdurchlass zum Fahrgastraum des Fahrzeugs versehen ist, **dadurch gekennzeichnet, dass** die Innenseite dieser Wand eine ebene Fläche auf dem Umfang des Luftdurchlasses (2) aufweist, und dass eine Schutzvorrichtung nach einem der Ansprüche 1 bis 8 in Höhe des Luftdurchlasses derart angeordnet ist, dass die Dichtung (7) des Wasserabweisers gegen die ebene Fläche in Anlage kommt.
